# EUROPÄISCHE PATENTSCHRIFT

(11) **EP 0 756 988 B1**
(45) Veröffentlichungstag und Bekanntmachung des Hinweises auf die Patenterteilung: **17.05.2000**
(21) Anmeldenummer: 96111342.0
(22) Anmeldetag: 13.07.1996
(51) Int. Cl.: B62D 49/08

(54) **Zusatzgewicht zur Fahrzeugballastierung**
Additional weight as ballast for a vehicle
Poids additionnel comme lest pour un véhicule

(30) Priorität: 03.08.1995 DE 19528476
(43) Veröffentlichungstag der Anmeldung: 05.02.1997
(73) Patentinhaber: DEERE & COMPANY, Moline, Illinois 61265-8098 (US)
(72) Erfinder: Teich, Michael, 68199 Mannheim (DE)
(74) Vertreter: Feldmann, Bernhard

(56) Entgegenhaltungen:
- DE-A- 3 314 684

## Beschreibung

Die Erfindung bezieht sich auf ein Zusatzgewicht zur Ballastierung eines landwirtschaftlichen oder industriellen Fahrzeugs mit seitlich vorstehenden Aufnahmebolzen, die der Aufnahme des Zusatzgewichts durch eine Hebeeinrichtung, beispielsweise eine Drei-Punkt-Geräteküpplung, dienen.

Der Einsatz immer schwerer werdender Anbaugeräte erfordert heute den Anbau größerer und schwererer Zusatzgewichte, um die Belastungen durch die Anbaugeräte auszugleichen. Die Zusatzgewichte sollen flexibel einsetzbar sein, so daß bei Bedarf ein schnelles An- und Abbauen, wie auch ein Einsatz als Front- und als Heckgewicht mit schnellem Umbau bei wechselnden Anforderungssituationen möglich ist.

Aufgrund der außerordentlichen Schwere dieser Zusatzgewichte von beispielsweise 900 kg sind diese nicht mehr einfach zu handhaben. Dadurch besteht die Notwendigkeit, Hebeeinrichtungen zu benutzen oder das Zusatzgewicht aus einzeln demontierbaren Teilen zusammenzusetzen.

Bei Gewichten, die als Ganzes gehandhabt werden, ist es bekannt, an den Seitenflächen des Zusatzgewichts Aufnahmebolzen zu befestigen, die der Aufnahme durch eine Hebeeinrichtung dienen. Für die Aufnahme des Zusatzgewichts wird die vordere bzw. die hintere Drei-Punkt-Anhängevorrichtung eingesetzt. Dies hat den Nachteil, daß die Anhängevorrichtung nicht mehr für den Anbau anderer Geräte zur Verfügung steht, ohne daß das Zusatzgewicht abgenommen wird. Ferner erfordert der bekannte Anbau eines Zusatzgewichts das Vorhandensein einer Anhängevorrichtung, die jedoch nicht immer zur Verfügung steht.

Die seitlich vorstehenden Aufnahmebolzen können bei der Handhabung und Lagerung stören und eine Verletzungsgefahr für das Bedienungspersonal darstellen. Auch eine Beschädigung der Bolzen bei rauhen Einsatzbedingungen ist nicht auszuschließen.

Es ist bekannt, die Aufnahmebolzen an den Seitenflächen mittels Flanschen an den Zusatzgewichten anzuschrauben. Hierbei besteht die Möglichkeit, die Aufnahmebolzen zu demontieren bzw. abzuschrauben. Dies ist zeitaufwendig und erfordert den Einsatz von Werkzeugen. Nach dem Abbauen der Aufnahmebolzen müssen diese mitsamt ihrer Befestigungsmittel gelagert werden, wobei sie leicht verlegt werden können.

Durch die DE-AS 20 59 208 ist eine Vorrichtung zum Anschluß eines Ballastgewichts an einen Schlepper bekannt, bei der das Ballastgewicht aus mehreren Einzelgewichten besteht, die mittels Vorsprüngen und entsprechender Ausnehmungen ineinander einhängbar sind. Von jedem Teilgewicht stehen seitliche Anschlußglieder vor, die dem Anschließen an verschiedene Arten von Geräteanbauvorrichtungen dienen. Die Anschlußglieder sind in Form von Anlenkzapfen ausgebildet, die in Vertiefungen an den Gewichtsseitenflächen angebracht sind. Auch hier besteht Verletzungs- und Beschädigungsgefahr.

Die der Erfindung zugrunde liegende Aufgabe wird darin gesehen, ein Zusatzgewicht mit seitlich vorstehenden Aufnahmebolzen der eingangs genannten Art vorzuschlagen, bei dem die genannten Probleme überwunden werden und das eine einfache Montage erlaubt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Zusatzgewicht weist wenigstens eine Ausnehmung zur Aufnahme der Aufnahmebolzen auf, in der die seitlich vorstehenden Enden der Aufnahmebolzen wenigstens teilweise im Zusatzgewicht versenkbar angeordnet sind. Der wesentliche Vorteil der erfindungsgemäßen Lösung besteht darin, daß die versenkten Aufnahmebolzen weder eine Verletzungsgefahr für das Bedienungspersonal darstellen, noch daß eine zeitaufwendige Demontage mit speziellen Werkzeugen erforderlich ist, die die Notwendigkeit beinhaltet, die Aufnahmebolzen mitsamt Befestigungsmitteln zu lagern.

Wird das Zusatzgewicht mehrteilig ausgeführt, bietet dies gießtechnische Vorteile, da so ein schnelleres Auskühlen des Gusses möglich ist. Durch Einbringen eines Zentralrohrs in zueinander korrespondierende Ausnehmungen der Teilgewichte lassen sich die Teilgewichte zu einer Einheit verbinden. Das Zentralrohr dient gleichzeitig der Aufnahme der Aufnahmebolzen.

Vorteilhaft ist es auch, die Aufnahmebolzen einstellbar auszubilden, um sie an verschiedenartige Hebeeinrichtungen und variierende Toleranzen anpassen zu können.

Spannmittel, insbesondere Verschraubungen, die an den Enden des Zentralrohrs vorgesehen sind, ermöglichen eine Befestigung des Zentralrohrs im Zusatzgewicht und sichern das Zentralrohr gegen Verschieben. Ferner ermöglichen die Spannmittel ein Verspannen von Teilgewichten in Achsrichtung des Zentralrohrs.

Vorzugsweise werden Senken an den außenliegenden Seitenflächen des Zusatzgewichts vorgesehen, die der Aufnahme der Spannmittel dienen. Damit können die Spannmittel innerhalb der Außenkontur des Zusatzgewichts angeordnet werden. Die Verletzungsgefahr, die von in den Raum ragenden Spannmitteln ausgeht, und eine Beschädigungsgefahr der Spannmittel wird vermindert.

Eine besonders herstellungsgünstige Ausführungsform der Spannmittel sind Muttern, die auf Außengewinde an den Enden des Zentralrohrs aufschraubbar sind.

Als vorteilhaft erweist sich eine Ausgestaltung der Teilgewichte in der Art, daß die Bohrung wenigstens eines äußeren Teilgewichts einen größeren Querschnitt aufweist als die Bohrung eines mittleren Teilgewichts, und daß zwischen dem Zentralrohr und der Bohrung des äußeren Teilgewichts ein Distanzrohr angeordnet ist. So ist es möglich, die Teilgewichte auch nach Wegnahme eines der äußeren Teilgewichte mit dem Zentralrohr zu verspannen und so eine differenzierte Ballastierung des Ackerschleppers zu ermöglichen.

Eine Lagefixierung der Teilgewichte zueinander ist möglich, wenn die einander zugewandten Seiten der Teilgewichte miteinander korrespondierende Vorsprünge und Vertiefungen aufweisen, die ineinandergreifen. Nach dem Verspannen der Teilgewichte können sich diese nicht mehr gegeneinander verdrehen.

Eine besonders einfache Art des Versenkens der Aufnahmebolzen ergibt sich, wenn diese jeweils wenigstens einen Gewindeabschnitt aufweisen, der in eine innerhalb des Zusatzgewichts liegende Gewindebohrung einschraubbar ist.

Eine Ausgestaltung der Aufnahmebolzen nach Anspruch 9 bietet durch die Aufteilung des Aufnahmebolzens in mehrere Funktionsabschnitte den Vorteil der genauen Anpassung der einzelnen Abschnitte an die jeweilige Aufgabe.

Durch eine konzentrisch umlaufende Nut im Führungsabschnitt erfolgt eine günstige Schmierung und ein vorteilhafter Abtransport von Schmutz und anderen unerwünschten Partikeln aus dem Inneren des Zentralrohrs an die Oberfläche des Zusatzgewichts. Hierdurch wird einem Verklemmen des Aufnahmebolzens entgegengewirkt.

Eine Querbohrung in dem nach außen gerichteten Bereich der Aufnahmebolzen vereinfacht das Verdrehen und damit das Ein- und Ausfahren des Aufnahmebolzens, da durch das Einbringen eines stabförmigen Teils in diese Bohrung ein Aufbringen des nötigen Einschraubmoments erleichtert wird.

Ein vollständiges Herausschrauben der Aufnahmebolzen und damit ein möglicher Verlust derselben kann verhindert werden, indem an den nach innen gerichteten Enden der Aufnahmebolzen Spannstifte, vorzugsweise in eine Querbohrung, eingesetzt werden.

Durch das Einbringen von Ausnehmungen in den Mantelbereich des Zentralrohrs wird eine Montage der Sicherungselemente ermöglicht.

Eine für die Montage des Zusatzgewichts besonders günstige Lage der Aufnahmebolzen zeichnet sich dadurch aus, daß die Aufnahmebolzen miteinander fluchten, und daß die Fluchtlinie im wesentlichen horizontal ausgerichtet ist und höher liegt als der Schwerpunkt des Zusatzgewichts. So pendelt sich dieses während des Bewegens durch die Hebeeinrichtung in eine Lage ein, in der es einfach in eine Aufnahmevorrichtung am Traktor eingesetzt werden kann.

Im folgenden wird die Erfindung anhand eines Beispiels und mit Bezug auf die beiliegenden Zeichnungen näher erläutert, wobei
- Fig. 1: eine Darstellung zweier Ackerschlepper zeigt, wobei in die hintere Drei-Punkt-Aufhängung des einen Ackerschleppers ein Zusatzgewicht eingehängt ist, das am Basisgewicht des zweiten Ackerschleppers eingehängt wird, und
- Fig. 2: einen Schnitt durch ein Zusatzgewicht mit einem Aufnahmebolzen in Anbauposition (rechts) und in versenkter Position (links) zeigt.

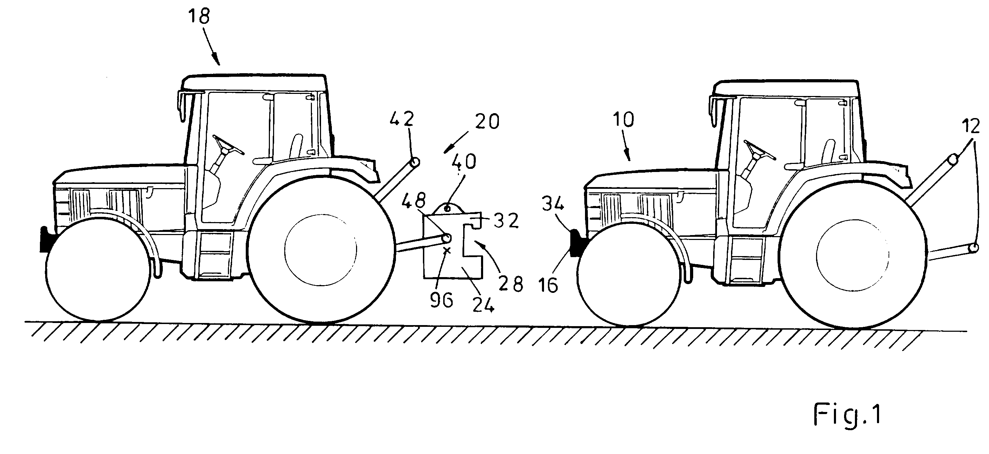

Fig. 1 zeigt einen Ackerschlepper 10 mit einer rückwärtigen Drei-Punkt-Anhängevorrichtung 12 und einem an der Frontseite des Ackerschleppers 10 angebrachten Basisgewicht 16. Weiter zeigt sie einen zweiten Ackerschlepper 18, der ebenfalls mit einer Drei-Punkt-Anhängevorrichtung 20 ausgestattet ist. Von den Unterlenkern 22 dieser Drei-Punkt-Anhängevorrichtung 20 wird ein Zusatzgewicht 24 getragen, das in das Basisgewicht 16 des ersten Ackerschleppers 10 eingehängt werden soll.

Das Zusatzgewicht 24 besitzt auf seiner dem Basisgewicht 16 zugewandten Seite 26 eine Montageaussparung 28, die an ihrer Oberseite einen hakenförmigen Fortsatz 32 aufweist. Mit diesem wird das Zusatzgewicht 24 in das Basisgewicht 16, das einen nach oben weisenden Fortsatz 34 aufweist, eingehängt. Anstelle der gezeigten Aufnahme durch die rückwärtige Drei-Punkt-Anhängevorrichtung 20 kann das Zusatzgewicht auch durch eine frontseitige Anhängevorrichtung oder durch jede andere geeignete Hebeeinrichtung aufgenommen und in das Basisgewicht 16 eingehängt werden.

An der Oberseite des Zusatzgewichts befindet sich eine Öse 40, die die Möglichkeit bietet, den Oberlenker 42 der Drei-Punkt-Anhängevorrichtung 20 einzuhängen. Dies ist beispielsweise hilfreich, wenn das Zusatzgewicht 24 als hinteres Ausgleichsgewicht fest an der Drei-Punkt-Anhängevorrichtung 20 angebracht werden soll, oder wenn es an einer frontseitigen Anhängevorrichtung verbleibt, weil der Traktor 10 kein zum Einhängen geeignetes Basisgewicht 16 besitzt.

An Seitenflächen 46 des Zusatzgewichts 24 befinden sich Aufnahmebolzen 44, die von den Haken 48 der Unterlenker 22 aufgenommen werden können. Um diese Aufnahmebolzen 44 an spezielle Drei-Punkt-Anhängevorrichtungen anzupassen, können kugelförmige Aufsätze auf die Aufnahmebolzen 44 aufgesteckt werden, die zu den speziell ausgeführten Haken passen.

Die Aufnahmebolzen 44 sind oberhalb des Schwerpunkts 96 des Zusatzgewichts 24 angeordnet, so daß sich dieses bei Aufnahme der Aufnahmebolzen 44 durch die Unterlenker 22 der Drei-Punkt-Anhängevorrichtung 20 in eine stabile Lage einpendelt, die die Montage an das Basisgewicht 16 begünstigt und die ein Kippen oder Überschlagen ausschließt.

Wird das Zusatzgewicht 24 abgelegt oder ist es am Basisgewicht 16 eingehängt, werden die Aufnahmebolzen 44 nicht mehr benötigt. Sie können vielmehr ein Verletzungsrisiko darstellen und schränken den frontseitigen Bauraum ein.

Daher sind die Aufnahmebolzen 44 des Zusatzgewichts 24 derart gestaltet, daß sie im Innern des Zusatzgewichts 24 versenkbar sind.

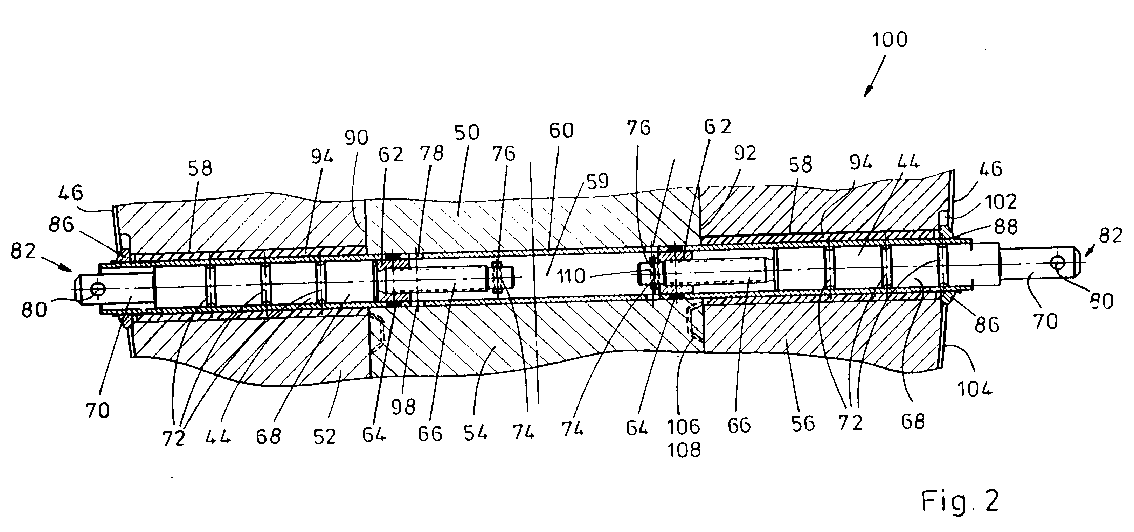

Fig. 2 zeigt auf der rechten Seite einen der Aufnahmebolzen 44 in seiner Transportposition, auf der linken Seite hingegen einen Aufnahmebolzen 44 in versenkter Stellung.

Im dargestellten Ausführungsbeispiel besteht das Zusatzgewicht aus 3 Teilgewichten 52, 54, 56, wobei horizontale Bohrungen 58, 59 alle drei Teile durchdringen. In die Bohrungen 58, 59 ist ein Zentralrohr 60 eingeschoben. Beide Enden des Zentralrohrs 60 sind mit Außengewinden 88 versehen. Auf diese ist jeweils eine Mutter 86 aufgeschraubt, durch die die Teilgewichte 52, 54, 56 auf dem Zentralrohr 60 und gegeneinander verspannt werden. Bevorzugt befinden sich diese Muttern 86 in Senken 102, an den außenliegenden Seitenflächen 46 des Zusatzgewichts 24, so daß sie fast vollständig innerhalb der Außenkontur 104 liegen. Um ein Verdrehen der Teilgewichte 52, 54, 56 gegeneinander zu unterbinden, sind diese an ihren Berührungsflächen 90, 92 mit ineinandergreifenden Vorsprüngen 106 und Vertiefungen 108 versehen, die während der Montage der Teilgewichte 52, 54, 56 ineinandereingefügt werden.

Um auch die Montage nur des mittleren Gewichtsteiles 54 oder einer Kombination der Teilgewichte 52, 54, 56 zu ermöglichen, lassen sich auf beide Seiten 90, 92 des mittleren Teilgewichts 54 Distanzrohre 94 auf das Zentralrohr 60 aufschieben. Die Bohrungen 58 in den beiden äußeren Teilgewichten 52, 56 sind vorsorglich mit einem größeren Durchmesser ausgeführt als die Bohrung 59 des mittleren Teilgewichts 54, um sie an den Außendurchmesser der Distanzrohre 94 anzupassen. Wird eines der äußeren Teilgewichte 52 oder 56 oder werden beide äußeren Teilgewichte 52, 56 nicht montiert, so erfolgt das Verspannen des Zentralrohrs 60 über die Distanzrohre 94 und das Aufschrauben der Muttern 86 auf die Gewinde 88 an den Enden des Zentralrohrs 60.

Innerhalb des Zentralrohrs 60 sind zwei Schraubbüchsen 62 mit Innengewinde 64 befestigt. Zur Montage der Schraubbüchsen 62 werden diese in das Zentralrohr 60 eingeschoben. In dem Zentralrohr 60 sind Querbohrungen 98 vorgesehen, durch die sich ein nicht dargestellter Stift stecken läßt, der die Einschubtiefe der Schraubbüchsen 62 begrenzt. Sind diese an dem Stift zum Anschlag gekommen, werden sie an die Rohrwandung eingeschweißt. Im Anschluß daran werden die Aufnahmebolzen 44 mit ihren zapfenförmigen Gewindeabschnitten 66 in die Schraubbüchsen 62 eingeschraubt. Die Aufnahmebolzen 44 werden durch Einschlagen eines Spannstifts 76 durch eine im Zentralrohr 60 vorgesehene Ausnehmung 78 in einer Bohrung 74 im jeweiligen Aufnahmebolzen 44 gesichert.

Jeder der beiden Aufnahmebolzen 44 ist in mehrere Funktionsabschnitte gegliedert: den bereits genannten Gewindeabschnitt 66, einen Führungsabschnitt 68 und einen Aufnahmeabschnitt 70 für die Montage an der Drei-Punkt-Anhängevorrichtung 12. Der Führungsabschnitt 68, der mitsamt des Gewindeabschnitts 66 in das Zentralrohr 60 eingeführt wird, trägt die Belastung durch das Zusatzgewicht 24 und führt den Aufnahmebolzen 44 während seines Ein- und Ausschraubens. In diesem Führungsabschnitt 68 sind mehrere ringförmige konzentrische Nuten 72 vorgesehen, die sowohl eine Schmierung als auch ein Abtransportieren von Schmutzpartikeln, wie sie im Feldeinsatz gewöhnlich anfallen, ermöglichen.

Der Aufnahmeabschnitt 70 ist so ausgebildet, daß er zu einer Drei-Punkt-Anhängevorrichtung 12 paßt, eine Anpassung an andere Hebeeinrichtungen ist möglich. Durch das Einschrauben besteht auch die Möglichkeit, Toleranzabweichungen zwischen unterschiedlichen Unterlenkern der Drei-Punkt-Anhängevorrichtung auszugleichen. In dem Aufnahmeabschnitt 70 ist jeweils eine Querbohrung 80 vorgesehen, in die zum Zweck des Ein- und Ausschraubens des Aufnahmebolzens 44 ein Stift, Schraubenzieher oder ähnliches einfaches Hilfsmittel einsteckbar ist, um den Schraubprozeß zu vereinfachen, ein speziell ausgebildetes Werkzeug ist hierfür nicht erforderlich.

## Patentansprüche

1. Zusatzgewicht zur Ballastierung eines landwirtschaftlichen oder industriellen Fahrzeugs, insbesondere Ackerschleppers, mit seitlich vorstehenden Aufnahmebolzen, die der Aufnahme des Zusatzgewichts (24) durch eine Hebeeinrichtung, beispielsweise eine Drei-Punkt-Gerätekupplung (20), dienen, dadurch gekennzeichnet, daß das Zusatzgewicht (24) wenigstens eine Ausnehmung (58, 59) zur Aufnahme der Aufnahmebolzen (44) aufweist, innerhalb der die seitlich vorstehenden Enden (70) der Aufnahmebolzen (44) wenigstens teilweise im Zusatzgewicht (24) versenkbar angeordnet sind.

2. Zusatzgewicht nach Anspruch 1, dadurch gekennzeichnet, daß das Zusatzgewicht (24) aus mehreren, vorzugsweise drei, Teilgewichten (52, 54, 56) besteht, durch die sich zueinander korrespondierende Ausnehmungen (58) zur Aufnahme eines die Teilgewichte (52, 54, 56) verbindenden Zentralrohrs (60) erstrecken, welches die Aufnahmebolzen (44) einstellbar aufnimmt, so daß sie sich versenken lassen.

3. Zusatzgewicht nach Anspruch 1 oder 2, dadurch gekennzeichnet, daß sich ein Zentralrohr (60) durch eine Ausnehmung, bevorzugt eine Bohrung (58, 59) des Zusatzgewichts (24), bzw. durch miteinander korrespondierende Bohrungen (58, 59) der Teilgewichte (52, 54, 56) erstreckt, und daß an den Enden (82) des Zentralrohrs (24) Spannmittel, insbesondere Verschraubungen (86) vorgesehen sind, durch die das Zentralrohr (60) im Zusatzgewicht (24) befestigbar ist und durch die sich gegebenenfalls die Teilgewichte (52, 54, 56) in Achsrichtung des Zentralrohrs (60) miteinander verspannen lassen.

4. Zusatzgewicht nach Anspruch 3, dadurch gekennzeichnet, daß die außenliegenden Seitenflächen (46) des Zusatzgewichts (24) Senken (102) zur Aufnahme der Spannmittel (86) enthalten, derart, daß sich die Spannmittel (86) wenigstens teilweise innerhalb der Außenkontur (104) des Zusatzgewichts (24) befinden.

5. Zusatzgewicht nach Anspruch 3 oder 4, dadurch gekennzeichnet, daß die Enden (82) des Zentralrohrs (60) Außengewinde (88) tragen, auf die Muttern (86) aufschraubbar sind.

6. Zusatzgewicht nach einem der Ansprüche 3 bis 5, dadurch gekennzeichnet, daß die Bohrung (58) wenigstens eines äußeren Teilgewichts (52, 56) einen größeren Querschnitt aufweist als die Bohrung (59) wenigstens eines mittleren Teilgewichts (54), und daß zwischen dem Zentralrohr (60) und der Bohrung (58) des äußeren Teilgewichts (52, 56) wenigstens ein Distanzrohr (94) angeordnet werden kann.

7. Zusatzgewicht nach einem der Ansprüche 2 bis 6, dadurch gekennzeichnet, daß bei einem mehrteiligen Zusatzgewicht (24) die einander zugewandten Seiten (90, 92) der Teilgewichte (52, 54, 56) miteinander korrespondierende Vorsprünge (106) und Vertiefungen (108) aufweisen, die eine Lagefixierung der Teilgewichte (52, 54, 56) zueinander ermöglichen.

8. Zusatzgewicht nach einem der Ansprüche 1 bis 7, dadurch gekennzeichnet, daß der Aufnahmebolzen (44) wenigstens einen Gewindeabschnitt (66) aufweist, der in eine innerhalb des Zusatzgewichts (24) liegende Gewindebohrung (64) einschraubbar ist, um den Aufnahmebolzen (44) zu versenken.

9. Zusatzgewicht nach einem der Ansprüche 3 bis 8, dadurch gekennzeichnet, daß der Aufnahmebolzen (44) einen im Zentralrohr (60) geführten zylindrischen Führungsabschnitt (68) aufweist, an den sich eine nach außen gerichtete Aufnahme (70) für die Hebeeinrichtung (20) und ein nach innen gerichteter Gewindeabschnitt (66) anschließen, und daß im Zentralrohr (60) wenigstens ein Innengewindeabschnitt (64), vorzugsweise eine in dem Zentralrohr (60) angeordnete Schraubbüchse (62), angeordnet ist, in die der Gewindeabschnitt (66) des Aufnahmebolzens (44) einschraubbar ist.

10. Zusatzgewicht nach Anspruch 9, dadurch gekennzeichnet, daß der Führungsabschnitt (70) wenigstens eine äußere konzentrisch umlaufende Nut (72) aufweist.

11. Zusatzgewicht nach einem der Ansprüche 1 bis 10, dadurch gekennzeichnet, daß der Aufnahmebolzen (44) in seinem nach außen gerichteten Bereich (70) wenigstens eine Querbohrung (80) aufweist, in die ein stabförmiges Teil zum Verdrehen des Aufnahmebolzens (44) einführbar ist.

12. Zusatzgewicht nach einem der Ansprüche 8 bis 11, dadurch gekennzeichnet, daß der Aufnahmebolzen (44) an seinem nach innen gerichteten Ende (110) Sicherungselemente trägt, die vorzugsweise als ein in eine Querbohrung des Aufnahmebolzens (44) eingesetzter Spannstift (76) ausgebildet sind und die ein vollständiges Herausschrauben des Aufnahmebolzens (44) verhindern.

13. Zusatzgewicht nach Anspruch 12, dadurch gekennzeichnet, daß das Zentralrohr (60) in seinem Mantelbereich Ausnehmungen (78) aufweist, die eine Montage der Sicherungselemente (76) ermöglichen.

14. Zusatzgewicht nach einem der Ansprüche 1 bis 13, dadurch gekennzeichnet, daß zwei Aufnahmebolzen (44) miteinander fluchten, und daß die Fluchtlinie im wesentlichen horizontal ausgerichtet ist und höher liegt als der Schwerpunkt des Zusatzgewichts (24).

## Claims

1. A supplementary weight for ballasting an agricultural or industrial vehicle, especially an agricultural tractor, with laterally projecting receiving pins, which serve for reception of the supplementary weight (24) by a lifting device, for example a three-point implement hitch (20), characterized in that the supplementary weight (24) has at least one recess (58, 59) for reception of the receiving pins (44), within which the laterally projecting ends (70) of the receiving pins (44) can be at least partially retracted into the supplementary weight (24).

2. A supplementary weight according to claim 1, characterized in that the supplementary weight (24) consists of a plurality, preferably three, partial weights (52, 54, 56), through which extend recesses (58) corresponding to one another for reception of a central tube (60) connecting the partial weights (52, 54, 56), which tube receives the receiving pins (44) movably, so that they can be retracted.

3. A supplementary weight according to claim 1 or 2, characterized in that a central tube (60) extends through a recess, preferably a bore (58, 59) of the supplementary weight (24), or through corresponding bores (58, 59) of the partial weights (52, 54, 56), and in that clamping means, especially screw fittings (86) are provided on the ends (82) of the central tube (60), through which the central tube (60) can be fixed in the supplementary weight (24) and through which as required the partial weights (52, 54, 56) can be tightened together in the axial direction of the central tube (60).

4. A supplementary weight according to claim 3, characterized in that the outer side surfaces (46) of the supplementary weight (24) have depressions (102) for reception of the clamping means (86), such that the clamping means (86) are located at least partially within the outer contour (104) of the supplementary weight (24).

5. A supplementary weight according to claim 3 or 4, characterized in that the ends (82) of the central tube (60) have external threads (88), on which nuts (86) can be screwed.

6. A supplementary weight according to any of claims 3 to 5, characterized in that the bore (58) of at least one outer partial weight (52, 56) has a greater cross-section than the bore (59) of at least one central partial weight (54), and in that at least one spacer tube (94) can be arranged between the central tube (60) and the bore (58) of the outer partial weight (52, 56).

7. A supplementary weight according to any of claims 2 to 6, characterized in that, in the case of a multi-part supplementary weight (24), the sides (90, 92) of the partial weights (52, 54, 56) facing one another have corresponding projections (106) and recesses (108), which facilitate fixing the partial weights (52, 54, 56) in position relative to one another.

8. A supplementary weight according to any of claims 1 to 7, characterized in that the receiving pin (44) has at least one threaded section (66), which can be screwed into a threaded bore (64) lying within the supplementary weight (24), in order to retract the receiving pin (44).

9. A supplementary weight according to any of claims 3 to 8, characterized in that the receiving pin (44) has a cylindrical guide section (68) guided in the central tube (60), adjoined by an outwardly directed receiver (70) for the lifting device (20) and an inwardly directed threaded section (64), and in that at least one internally threaded section (64), preferably a threaded bush (62) arranged in the central tube (60), is arranged in the central tube (60), into which the threaded section (66) of the receiving pin (44) can be screwed.

10. A supplementary weight according to claim 10, characterized in that the guide section (70) has at least one external, concentric, surrounding groove (72).

11. A supplementary weight according to any of claims 1 to 10, characterized in that the receiving pin (44) has at least one transverse bore (80) in its outwardly directed region (70), in which a rod-shaped part can be introduced for turning the receiving pin (44).

12. A supplementary weight according to any of claims 8 to 11, characterized in that the receiving pin (44) carries securing elements on its inwardly directly end (110), preferably formed as a spring dowel sleeve (76) fitted in a transverse bore of the receiving pin (44) and preventing the receiving pin (44) being screwed out completely.

13. A supplementary weight according to claim 12, characterized in that the central tube (60) has openings (78) in its peripheral region, which facilitate fitting the securing elements (76).

14. A supplementary weight according to any of claims 1 to 13, characterized in that two receiving pins (44) are in line with one another and in that the line of alignment is substantially horizontally directed and lies higher that the centre of gravity of the supplementary weight (24).

## Revendications

1. Poids additionnel pour lester un véhicule agricole ou industriel, notamment d'un tracteur agricole, comportant des boulons de réception qui font saillie latéralement, qui servent à loger le poids additionnel (24) à l'aide d'un dispositif de levage, par exemple un attelage d'appareil en trois points (20), caractérisé en ce que le poids additionnel (24) comporte au moins un évidement (58, 59) servant à loger le boulon de réception (44) et à l'intérieur duquel les extrémités (70), qui font saillie latéralement, des boulons de réception (44) sont disposés de manière au moins partiellement en renfoncement dans le poids additionnel (24).

2. Poids additionnel selon la revendication 1, caractérisé en ce que le poids additionnel (24) est constitué de plusieurs, de préférence trois poids partiels (52, 54, 56), dans lesquels s'étendent des évidements (58) qui se correspondent réciproquement et servent à loger l'un des poids partiels (52, 54, 56) pour recevoir un tube central (60), qui relie les poids partiels (52, 54, 56) et qui loge, avec possibilité de réglage, les boulons de réception (44) de sorte qu'ils peuvent se placer en renfoncement.

3. Poids additionnel selon la revendication 1 ou 2, caractérisé en ce que le tube central (60) s'étend dans un évidement, de préférence un perçage (58, 59) du poids additionnel (24) ou à travers des perçages (58, 59), qui se correspondent, des poids partiels (52, 54, 56) et que sur les extrémités (82) du tube central (60) sont prévus des moyens de serrage, notamment des systèmes de vissage (86), à l'aide desquels le tube central (60) peut être fixé dans le poids additionnel (24) et à l'aide les poids partiels (52, 54, 56) peuvent être éventuellement serrés entre eux dans la direction axiale du tube central (60).

4. Poids additionnel selon la revendication 3, caractérisé en ce que les surfaces latérales extérieures (46) du poids additionnel (24) comportent des renfoncements (102) servant à loger les moyens de serrage (86) de telle sorte que les moyens de serrage (86) sont situés au moins en partie à l'intérieur du contour extérieur (104) du poids additionnel (24).

5. Poids additionnel selon la revendication 3 ou 4, caractérisé en ce que les extrémités (82) du tube central (60) portent des filetages extérieurs (88), sur lesquels des écrous (86) peuvent être vissés.

6. Poids additionnel selon l'une des revendications 3 à 5, caractérisé en ce que le perçage (58) d'au moins un poids partiel extérieur (52, 56) possède une section transversale supérieure à celle du perçage (59) d'au moins un poids partiel médian (54), et qu'au moins un tube entretoise (94) peut être disposé entre le tube central (60) et le perçage (58) du poids partiel extérieur (52, 56).

7. Poids additionnel selon l'une des revendications 2 à 6, caractérisé en ce que dans le cas d'un poids additionnel (24) formés de plusieurs éléments, les côtés (90, 92), qui se font face, des poids partiels (52, 54, 56) comportent des appendices saillants (106) et des renfoncements (108), qui se correspondent et permettent une fixation de la position réciproque des poids partiels (52, 54, 56).

8. Poids additionnel selon l'une des revendications 1 à 7, caractérisé en ce que le boulon de réception (44) possède au moins une partie filetée (66), qui peut être vissée dans un perçage taraudé (64) situé à l'intérieur du poids additionnel (24), de manière à pivoter autour du boulon de réception (44).

9. Poids additionnel selon l'une des revendications 3 à 8, caractérisé en ce que le boulon de réception (44) possède une section cylindrique de guidage (68), qui est guidée dans le tube central (60) et à laquelle se raccordent un logement (70), dirigé vers l'extérieur, pour le dispositif de levage (20) et une partie filetée (66) dirigée vers l'intérieur et que dans le tube central (60) est disposé au moins une taraudée (64), de préférence une douille vissable (62) disposée dans le tube central (60) et dans laquelle la partie filetée (66) du boulon de réception (44) peut être vissée.

10. Poids additionnel selon la revendication 9, caractérisé en ce que la partie de guidage (70) possède au moins un écrou extérieur (72) qui s'étend concentriquement.

11. Poids additionnel selon l'une des revendications 1 à 10, caractérisé en ce que le boulon de réception (44) possède, dans sa partie (70) dirigée vers l'extérieur, au moins un perçage transversal (80), dans lequel une partie en forme de tige peut être introduite pour le vissage du boulon de réception (44).

12. Poids additionnel selon l'une des revendications 8 à 11, caractérisé en ce que le boulon de réception (44) porte, sur son extrémité (110) dirigée vers l'intérieur, des éléments de sécurité, qui sont agencés de préférence sous la forme d'une tige de serrage (76) insérée dans un perçage transversal du boulon de réception (44) et qui empêchent un dévissage complet du boulon de réception (44).

13. Poids additionnel selon la revendication 12, caractérisé en ce que le tube central (60) possède, dans sa partie enveloppe, des évidements (78), qui permettent un montage des éléments de sécurité (76).

14. Poids additionnel selon l'une des revendications 1 à 13, caractérisé en ce que deux boulons de réception (44) sont alignés entre eux et que la ligne d'alignement est sensiblement horizontale et située à un niveau plus élevé que le centre de gravité du poids additionnel (24).
